# EUROPEAN PATENT APPLICATION

(11) **EP 3 490 173 A1**
(43) Date of publication of application: **29.05.2019**
(21) Application number: 17203030.6
(22) Date of filing: 22.11.2017
(51) Int. Cl.: H04H 20/63, H04H 40/90, H04N 7/20, H04N 21/436, H04N 21/61

(54) **SATELLITE RECEIVER DEVICE AND METHOD FOR RECEIVING SATELLITE SIGNALS**

(71) Applicant: Vestel Elektronik Sanayi ve Ticaret A.S., 45030 Manisa (TR)
(72) Inventor: KIRAZ, Alp, 45030 Manisa (TR)
(74) Representative: Ascherl, Andreas

(57) **Abstract**

The present invention provides a satellite receiver device (100, 200, 300) for receiving satellite signals (150, 250, 350) via a low-noise block downconverter, LNB, (152, 252, 352) and for reproducing content channels transported in the received satellite signals (150, 250, 350), the satellite receiver device (100, 200, 300) comprising a signal input connector (101, 201, 301) configured to receive the satellite signals (150, 250, 350), a detector (102, 202, 302) coupled to the signal input connector (101, 201, 301) and configured to detect control signals in the received satellite signals (150, 250, 350), and a control unit (104, 204, 304) configured to limit a number of reproducible content channels to the content channels that are transported in the satellite signals (150, 250, 350) according to the detected control signals if control signals are detected in the received satellite signals (150, 250, 350) by the detector (102, 202, 302). Further, the present invention provides a respective method.

## Description

### TECHNICAL FIELD

The invention relates to a satellite receiver device and to a method for receiving satellite signals.

### BACKGROUND

Although applicable to any wireless content delivery system, the present invention will mainly be described in conjunction with satellite based content delivery systems and satellite receivers.

Modern consumer electronics allow users to listen to a plurality of radio stations, e.g. via radio receivers, and to watch a plurality of TV programs, e.g. via respective TV sets. There exist different systems for providing the single stations or channels to the user's premises. The channel's content may e.g. be provided to the users via terrestrial wireless signal, e.g. UHF signals or as digital wireless data stream. As alternative, the channel's content may be provided to the users via cable providers or via internet streaming.

However, especially in rural locations, the coverage with any one of the above options may be limited. As alternative to the above mentioned possibilities, radio and/or TV channel's content may therefore also be provided to users via satellite based communication systems.

Usually, a user will install a satellite antenna, also called satellite dish, together with a LNB and connect a respective receiver to the LNB. It is further possible to cascade the receivers. Modern LNBs allow a receiver to select a polarization and a frequency band by providing respective control voltages or signals to the LNB via the cable that connects the LNB to the receiver.

However, in cascaded arrangements the second and further receivers in the cascade may not be able to control the LNB and may therefore list channels in the channel list that may momentarily not be displayed.

Accordingly, there is a need for improving channel selection in satellite receivers.

### SUMMARY OF THE INVENTION

The present invention provides a satellite receiver device with the features of claim 1 and a method for receiving satellite signals with the features of claim 8.

Accordingly, it is provided:
A satellite receiver device for receiving satellite signals via a low-noise block downconverter, LNB, and for reproducing content channels transported in the satellite signals, the satellite receiver device comprising a signal input connector configured to receive the satellite signals, a detector coupled to the signal input connector and configured to detect control signals in the received satellite signals, and a control unit configured to limit a number of reproducible content channels to the content channels that are transported in the satellite signals according to the detected control signals if control signals are detected in the received satellite signals by the detector.

Further, it is provided:
A method for receiving satellite signals via a low-noise block downconverter, LNB, and for reproducing content channels transported in the satellite signals. The method comprising receiving the satellite signals with a signal input connector of a satellite receiver device, detecting control signals in the received satellite signals with a detector coupled to the signal input connector, and limiting with a control unit a number of reproducible content channels to the content channels that are transported in the satellite signals according to the detected control signals if control signals are detected in the received satellite signals by the detector.

A LNB usually comprises a combination of a low-noise amplifier, a frequency mixer, a local oscillator and an intermediate frequency amplifier. The LNB receives a microwave signal from the satellite collected by the dish, amplifies it, and downconverts incoming signal from the received block of frequencies to a lower block of intermediate frequencies. This signal may then be received and further processed by the receiver.

Usually satellite TV signals are polarized for transmission from the satellite to the satellite dish, because more TV channels may be transmitted using a given block of frequencies. This however requires the use of receiving equipment that can filter incoming signals based on their polarization. This allows transmitting two satellite TV signals on the same frequency and the receiving equipment can still separate them by polarization and display whichever one is currently required.

Most satellite TV transmissions use vertical and horizontal linear polarization. In LNBs that support multiple polarizations, usually an electronic switch that is controlled by the voltage of the LNB's power supply from the receiver, e.g. 13 V for vertical and 18 V for horizontal, determines which polarization is passed on through the LNB for amplification and block-downconversion.

During development of satellite based communication or transmission systems, the range of downlink frequencies used e.g. in the FSS band (10.70-11.70 GHz) grew beyond that provided for by the standard LNBs and receivers of the time. For example the reception of signals from Astra 1D required an extension of the receivers' intermediate tuning range from 950-1,950 MHz to 950-2,150 MHz and a change of LNBs' local oscillator frequency from the usual 10 GHz to 9.75 GHz (so-called "Enhanced" LNBs). Later, new digital services required the introduction of an LNB that would receive the whole frequency range 10.70-12.75 GHz, the "Universal" LNB, which is commonly used today.

Such a Universal LNB comprises a switchable local oscillator frequency of 9.75/10.60 GHz to provide two modes of operation: low band reception (10.70-11.70 GHz) and high band reception (11.70-12.75 GHz). In the LNB the local oscillator frequency is switched in response to a 22 kHz signal that may be superimposed on the supply voltage from the connected receiver. With the supply voltage level that may be used to switch between polarizations, this enables a Universal LNB to receive both polarizations, vertical and horizontal, in the full range of frequencies under the control of the receiver.

The present invention is based on the finding that especially in low-cost cascaded satellite receiver arrangements, the second and further satellite receiver devices may be limited regarding the control of the LNB. A cascade of satellite receiver devices may e.g. be created by using a satellite receiver device as first receiver in the cascade that comprises a so called LOOP out connector. The LNB is then connected to the first satellite receiver device, i.e. the IN connector of the first satellite receiver device, via a cable. The second satellite receiver device in the cascade is then connected with its' IN connector to the LOOP out connector of the first satellite receiver device. As alternative, splitters may be used that split a single cable from the LNB into two or more cables for connection to the satellite receiver devices.

However, in such arrangements, only one of the satellite receiver devices, i.e. the master device, can control the LNB, in a cascade this is usually the first receiver. Therefore, the other receivers are limited to receiving the satellite signals as selected by the master device.

However, usually the satellite receiver devices that are not the master devices will try to set the control signals and receive the respective satellite signals, i.e. channels, if a user selects any channel that is not provided by the LNB with the current control signals.

To prevent a receiver from trying to set the control signals and receive the respective satellite signals, the present invention provides the detector in the satellite receiver device. The detector identifies any control signals that may be present in the received signals. If the detector detects control signals in the satellite signals, this indicates that the control signals are provided by another satellite receiver device. The control signals may e.g. overlay the satellite signals in the form of a control voltage or a tone signal with a predetermined frequency and may be provided to the satellite receiver device via the signal input connector and the cable that connects the satellite receiver device to the LNB or another satellite receiver device.

The control unit is coupled to the detector and may be provided by the detector with information regarding the detected control signals. The control unit may then limit the reproducible channels to those channels that are available in the received satellite signals according to the control signals.

The control signals may e.g. control the LNB to select a specific frequency band and a specific polarization. This means that only the content channels of the specific frequency band and polarization will be available to the satellite receiver device.

By limiting the reproducible channels, the present invention effectively prevents the satellite receiver device from trying to receive and reproduce content channels that are not available in the received signals.

It is understood, that this limitation may also be reflected in a channel list that is presented to a user. The content channels that are currently not available may e.g. be removed from the channel list or may be grayed out in the channel list. This means that a user is automatically limited to selecting only the available channels.

Further embodiments of the present invention are subject of the further subclaims and of the following description, referring to the drawings.

In an embodiment, the control signals may comprise a control voltage, and the detector may comprise a voltage detector that is configured to detect the voltage level of the control voltage and to provide a respective voltage information to the control unit.

The voltage that a satellite receiver device supplies to a LNB usually selects the polarization that is used for receiving satellite signals by the LNB. The voltage levels for two polarizations, i.e. vertical and horizontal, may be predetermined. Possible voltage levels may e.g. comprise 13 V for vertical polarization and 18 V for horizontal polarization.

The voltage detector may e.g. comprise a low pass filter in conjunction with one or more comparators. A comparator may e.g. comprise a threshold voltage of 13 V and another comparator may comprise a threshold voltage of 18 V. The outputs of the comparators may be connected to the control unit that may assume a vertical polarization setting in the LNB if only one comparator provides a positive signal and that may assume a horizontal polarization setting in the LNB if both comparators provide a positive signal.

If the voltage detector detects no voltage at all, e.g. if none of the comparators provides a positive signal, the control unit may assume that no other satellite receiver device is present that controls the LNB and provide control signals itself.

In another embodiment, if the voltage detector detects a voltage level of 13 V, the control unit may be configured to limit the reproducible content channels to content channels that are transmitted via vertically polarized satellite signals, and if the voltage detector detects a voltage level of 18 V, the control unit may be configured to limit the reproducible content channels to content channels that are transmitted via horizontally polarized satellite signals.

The selection of vertically and horizontally polarized signals via a control voltage of 13 V and 18 V, respectively, represents the standard arrangement of so called universal LNBs, sometimes also referred to as "Astra" LNBs. Providing this voltage levels in the voltage detector and the respective channel selection in the control unit therefore allows the satellite receiver device to operate with such widely used or standard LNBs.

In a further embodiment, the control signals may comprise at least one tone signal with predetermined frequencies, especially a tone signal with a frequency of 22 kHz, and the detector may comprise a frequency detector that is configured to detect the tone signals and to provide a respective frequency information to the control unit.

The tone signal that a satellite receiver device supplies to a LNB usually selects the frequency band that is used for receiving satellite signals by the LNB. The tone signal may e.g. comprise a frequency of 22 kHz. This means that if no tone signal is present in the received satellite signals, either the frequency band is selected that does not require the tone signal or no other satellite receiver device is present. If the tone signal is present, the other frequency band is actively selected by another satellite receiver device. It is understood, that the present invention is not limit to a single tone signal and that more than one tone signals may be processed.

The frequency detector may e.g. comprise a bandpass filter for every frequency. If an output signal is detected on the output of the respective bandpass filter, the respective tone signal is present in the received satellite signals. The outputs of the bandpass filters may be coupled to the control unit. It is however possible to provide other elements between the outputs and the control unit, like e.g. one or more comparators. That only provides a positive signal to the control unit if the respective frequency is detected with a predetermined signal level.

If the frequency detector detects no frequency at all, e.g. if none of the bandpass filters provides a positive output signal, the control unit may assume that no other satellite receiver device is present that controls the LNB and may provide control signals itself.

In an embodiment, if the frequency detector detects at least one tone signal, the control unit may be configured to limit the reproducible content channels to content channels that are transmitted via a frequency band that corresponds to the detected tone signals.

The selection of the frequency band via a tone signal represents the standard arrangement in modern LNBs, for example universal LNBs sometimes also referred to as "Astra" LNBs. Detecting these tone signals in the frequency detector and the respective channel selection in the control unit therefore allows the satellite receiver device to operate with such widely used or standard LNBs.

In an embodiment, the control unit may be configured to visually limit the reproducible content channels in a user menu of the satellite receiver device.

The control unit may e.g. grey out the non-reproducible content channels in a channel list that is displayed in the user menu. As alternative, the control unit may only display the reproducible content channels, i.e. the non-reproducible content channels are not shown at all in the list.

In an embodiment, the control unit may be configured to provide control signals to the LNB according to a user channel selection if no control signals are detected by the detector.

If the detector does not detect any control signals, i.e. no control voltage and/or no tone signal, it may be assumed that no other satellite receiver device is in control of the LNB. This means that the satellite receiver device may be the only satellite receiver device that is connected to the LNB or that the other satellite receiver devices are set to a slave mode and do not try to control the LNB.

It is further possible, that multiple satellite receiver devices according to the present invention perform an arbitration to select a control master that may control the LNB. In addition, a user may e.g. manually select the control master, e.g. in a user menu or via switches provided on the satellite receiver devices. An arbitration may e.g. be performed by using a CSMA/CD (Carrier Sense Multiple Access/Collision Detection) method in the single satellite receiver devices.

Further, the satellite receiver device may comprise a LOOP out connector and may be configured to forward any control signal that is generated by the satellite receiver device or that is received via the LNB connector of the satellite receiver device to the LOOP out connector. At the same time the satellite receiver device may be configured to stop or not-forward any control signals that are received via the LOOP out connector. This allows easily cascading multiple satellite receiver devices, wherein the first satellite receiver device will automatically be the master and the control signals will be provided to all cascaded satellite receiver devices.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a satellite receiver device according to the present invention;
Fig. 2 shows a block diagram of another embodiment of a satellite receiver device according to the present invention;
Fig. 3 shows a block diagram of another embodiment of a satellite receiver device according to the present invention;
Fig. 4 shows a flow diagram of an embodiment of a method according to the present invention.

In the figures like reference signs denote like elements unless stated otherwise.

### DETAILED DESCRIPTION OF THE DRAWINGS

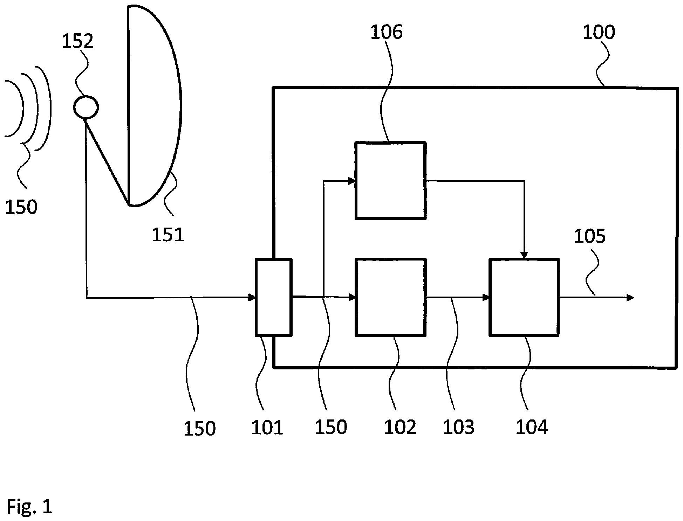

Fig. 1 shows a block diagram of a satellite receiver device 100 for receiving satellite signals 150 via a low-noise block downconverter, LNB, 152 that is mounted to a satellite dish or antenna 151. The satellite receiver device 100 may e.g. reproduce the content channels transported in the satellite signals 150 on a display (not explicitly show). It is understood, that the satellite receiver device 100 may e.g. be integrated into a display device, like a TV set, or may be arranged externally to the display device, e.g. as set-top box. Such a set-top box may be connected to the display device e.g. via a HDMI cable. It is further understood, that the satellite receiver device 100 may provide the user with a user interface that may e.g. be shown as an on screen menu on the display device. The user menu may e.g. allow the user to select a content channel, consult an electronic program guide or change configuration settings of the satellite receiver device 100.

The satellite receiver device 100 comprises a signal input connector 101 that is coupled to the LNB 152 via a cable. The signal input connector 101 is further coupled to a detector 102, and the detector 102 is coupled to a control unit 104.

The satellite receiver device 100 receives the satellite signals 150 from the LNB 152 via the signal input connector 101. The signal input connector 101 forwards the received satellite signals 150 to the detector 102 that tries to detect or identify control signals in the received satellite signals 150. As will be described in more details below, such control signals may e.g. comprise control voltages or tone signals. It is however understood, that any other type of controls signals are also possible.

The detector 102 will in case that it detects control signals in the satellite signals 150, provide respective detection signals 103 to the control unit 104. The detection signals 103 will inform the control unit 104 of the detected control signals. In a possible embodiment, the detection signals 103 may comprise the detected control signals or the detector 102 may simply forward detected control signals to the control unit 104.

The control unit 104 will analyze the detected control signals and may then determine the type of satellite signals 150 that are provided by the LNB 152 to the satellite receiver device 100. Since depending on the type of satellite signals 150 that are selected by the control signals, the content channels that are contained in the satellite signals 150 vary, the control unit 104 may then limit a number of reproducible content channels to the content channels that are transported in the satellite signals 150 according to the detected control signals.

In case that the LNB 152 comprises a universal LNB 152, the control signals may e.g. comprise control voltages, that may at the same time be the operating voltage of the LNB, and/or tone signals with predetermined frequencies as will be explained below.

The satellite receiver device 100 further comprises a signal reception chain 106 for processing the satellite signals 150 to extract the contents of the transmitted content channels. The signal reception chain 106 may e.g. comprise a tuner and a demodulator and provide the demodulated signals to the control unit 104. The control unit 104 then generates respective display signals 105 that may then be shown on a display device.

The control unit 104 may therefore comprise or be embedded in a satellite receiver controller or SOC, system on chip, that processes the decoded signals and displays the content of selected content channels on a display. Such a satellite receiver controller may also provide the user interface and allow a user to select the content channel he wants to watch.

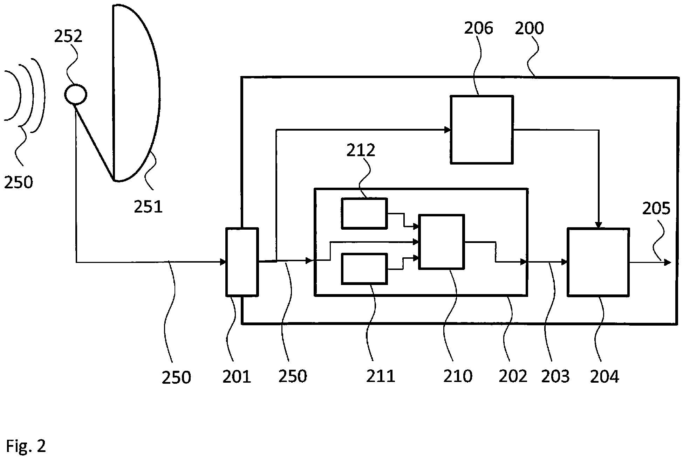

Fig. 2 shows a block diagram of another satellite receiver device 200. The satellite receiver device 200 is based on the satellite receiver device 100 and therefore also comprises a signal input connector 201 that is coupled to a LNB 252 and provides the received satellite signals 250 to the detector 202 and a signal reception chain 206. The detection signals 203 and the processed satellite signals 250 are then provided to a control unit 204 that generates the respective display signals 205.

In the satellite receiver device 200 the detector 202 comprises a voltage detector 210. The voltage detector 210 may e.g. comprise voltage comparators or any device that detects the presence of a specific voltage of one of a number of predetermined voltage levels in the satellite signals 250 that are provided from the LNB 252 to the satellite receiver device 200. In the satellite receiver device 200 two reference voltages 211, 212 are provided to the voltage detector 210. The reference voltages 211, 212 may e.g. comprise a 13 V and an 18 V voltage. This means, that in the arrangement of the satellite receiver device 200, the voltage detector 210 will detect a 13 V or an 18 V voltage in the satellite signals 250. It is however understood, that any other voltage level and number of voltages is also possible.

The voltage detector 210 may e.g. output a positive signal, if the 13 V voltage is detected and a negative signal, if the 18 V voltage is detected. As alternative the voltage detector 210 may comprise to outputs. In this case the voltage detector 210 may e.g. output two negative signals if no voltage is detected and provide a positive signal with a respective one of the two outputs if either a 13 V or an 18 V voltage is detected. As alternative, a digital interface may be provided between the voltage detector 210 and the control unit 204.

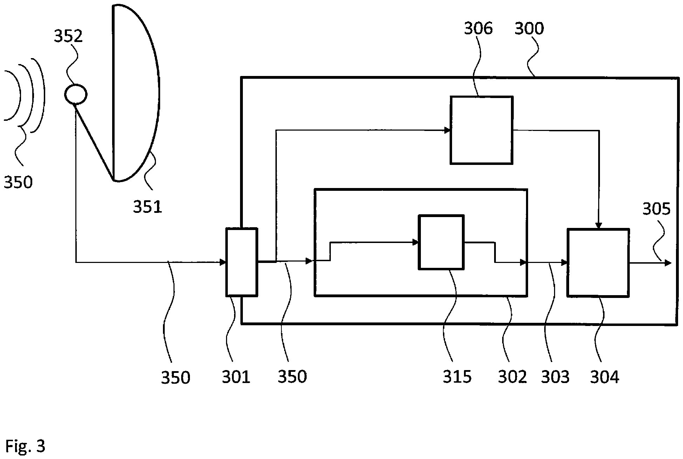

Fig. 3 shows a block diagram of a satellite receiver device 300. The satellite receiver device 300 is also based on the satellite receiver device 100 and therefore also comprises a signal input connector 301 that is coupled to a LNB 352 and provides the received satellite signals 350 to the detector 302 and a signal reception chain 306. The detection signals 303 and the processed satellite signals 350 are then provided to a control unit 304 that generates the respective display signals 305.

In the satellite receiver device 300 the detector 302 comprises a frequency detector 315. The frequency detector 315 may e.g. comprise a high-pass filter, a low-pass filter or a band-pass filter that filters out the respective frequency, e.g. a 22 kHz frequency.

The frequency detector 315 may e.g. output a positive signal, if the respective tone signal or frequency is detected. It is understood, that the frequency detector 315 may e.g. comprise a plurality of frequency selective elements, e.g. band-pass filters, with different frequency characteristics in order to detect multiple tone signals in parallel. Every frequency selective element may then provide a respective signal to the control unit 304. As alternative, a digital interface may be provided between the frequency detector 315 and the control unit 304.

It is understood, that the different embodiments of a satellite receiver device may be combined into a single device. For example, a satellite receiver device may at the same time comprise the voltage detector 210 and the frequency detector 315 in the detector.

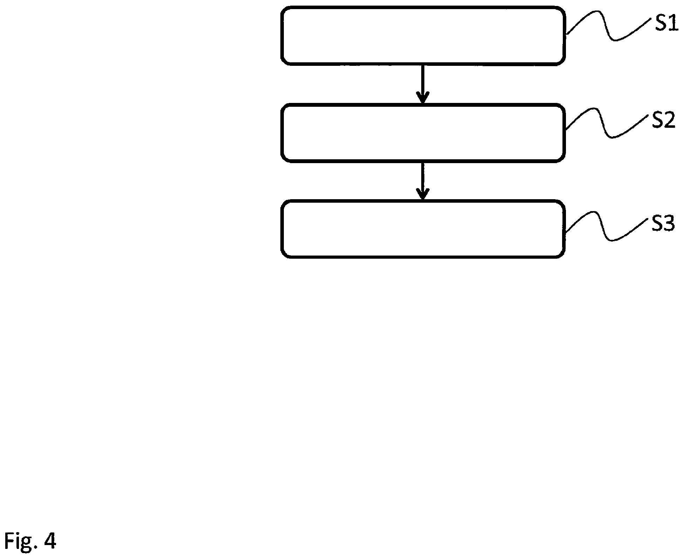

For sake of clarity in the following description of the method based Fig. 4 the reference signs used above in the description of apparatus based Figs. 1 - 3 will be maintained.

Fig. 4 shows a flow diagram of an embodiment of a method for receiving satellite signals 150, 250, 350 via a low-noise block downconverter, LNB, 152, 252, 352 and reproducing content channels transported in the satellite signals 150, 250, 350.

The method comprises receiving S1 the satellite signals 150, 250, 350 with a signal input connector 101, 201, 301 of a satellite receiver device 100, 200, 300, detecting S2 control signals in the received satellite signals 150, 250, 350 with a detector 102, 202, 302 coupled to the signal input connector 101, 201, 301, and limiting S3 with a control unit 104, 204, 304 a number of reproducible content channels to the content channels that are transported in the satellite signals 150, 250, 350 according to the detected control signals if control signals are detected in the received satellite signals 150, 250, 350 by the detector 102, 202, 302.

In an embodiment, the control signals may comprise a control voltage. The method may therefore comprise detecting the voltage level of the control voltage and providing a respective voltage information to the control unit 104, 204, 304.

For example if a voltage level of 13 V is detected, the control unit 104, 204, 304 may limit the reproducible content channels to content channels that are transmitted via vertically polarized satellite signals 150, 250, 350, and if a voltage level of 18 V is detected, the control unit 104, 204, 304 may limit the reproducible content channels to content channels that are transmitted via horizontally polarized satellite signals 150, 250, 350.

The control signals may e.g. also comprise at least one tone signal with predetermined frequencies, especially a tone signal with a frequency of 22 kHz. The method may then comprise detecting the tone signals and providing a respective frequency information to the control unit 104, 204, 304.

For example, if at least one tone signal is detected, the control unit 104, 204, 304 may limit the reproducible content channels to content channels that are transmitted via a frequency band that corresponds to the detected tone signals.

The control unit 104, 204, 304 may also visually limit the reproducible content channels in a user menu of the satellite receiver device 100, 200, 300, e.g. by greying out the respective content channels or removing the respective content channels from the channel list.

Further, the control unit 104, 204, 304 may provide control signals to the LNB 152, 252, 352 according to a user channel selection, if no control signals are detected by the detector 102, 202, 302.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides a satellite receiver device 100, 200, 300 for receiving satellite signals 150, 250, 350 via a low-noise block downconverter, LNB, 152, 252, 352 and reproducing content channels transported in the satellite signals 150, 250, 350, the satellite receiver device 100, 200, 300 comprising a signal input connector 101, 201, 301 configured to receive the satellite signals 150, 250, 350, a detector 102, 202, 302 coupled to the signal input connector 101, 201, 301 and configured to detect control signals in the received satellite signals 150, 250, 350, and a control unit 104, 204, 304 configured to limit a number of reproducible content channels to the content channels that are transported in the satellite signals 150, 250, 350 according to the detected control signals if control signals are detected in the received satellite signals 150, 250, 350 by the detector 102, 202, 302. Further, the present invention provides a respective method.

### List of reference signs

- 100, 200, 300: satellite receiver device
- 101, 201, 301: signal input connector
- 102, 202, 302: detector
- 103, 203, 303: detection signal
- 104, 204, 304: control unit
- 105, 205, 305: display signal
- 106, 206, 306: signal reception chain

- 210: voltage detector
- 211, 212: reference voltage

- 315: frequency detector

- 150, 250, 350: satellite signals
- 151, 251, 351: satellite dish
- 152, 252, 352: low-noise block downconverter

- S1, S2, S3: method steps

## Claims

1. Satellite receiver device (100, 200, 300) for receiving satellite signals (150, 250, 350) via a low-noise block downconverter, LNB, (152, 252, 352) and for reproducing content channels transported in the received satellite signals (150, 250, 350), the satellite receiver device (100, 200, 300) comprising:
a signal input connector (101, 201, 301) configured to receive the satellite signals (150, 250, 350),
a detector (102, 202, 302) coupled to the signal input connector (101, 201, 301) and configured to detect control signals in the received satellite signals (150, 250, 350), and
a control unit (104, 204, 304) configured to limit a number of reproducible content channels to the content channels that are transported in the satellite signals (150, 250, 350) according to the detected control signals if control signals are detected in the received satellite signals (150, 250, 350) by the detector (102, 202, 302).

2. Satellite receiver device (100, 200, 300) according to claim 1, wherein the control signals comprise a control voltage, and wherein the detector (102, 202, 302) comprises a voltage detector (210) that is configured to detect the voltage level of the control voltage and to provide a respective voltage information to the control unit (104, 204, 304).

3. Satellite receiver device (100, 200, 300) according to claim 2, wherein if the voltage detector (210) detects a voltage level of 13 V, the control unit (104, 204, 304) is configured to limit the reproducible content channels to content channels that are transmitted via vertically polarized satellite signals (150, 250, 350), and wherein if the voltage detector (210) detects a voltage level of 18 V, the control unit (104, 204, 304) is configured to limit the reproducible content channels to content channels that are transmitted via horizontally polarized satellite signals (150, 250, 350).

4. Satellite receiver device (100, 200, 300) according to any one of the preceding claims, wherein the control signals comprise at least one tone signal with predetermined frequencies, especially a tone signal with a frequency of 22 kHz, and wherein the detector (102, 202, 302) comprises a frequency detector (315) that is configured to detect the tone signals and to provide a respective frequency information to the control unit (104, 204, 304).

5. Satellite receiver device (100, 200, 300) according to claim 4, wherein if the frequency detector (315) detects at least one tone signal, the control unit (104, 204, 304) is configured to limit the reproducible content channels to content channels that are transmitted via a frequency band that corresponds to the detected tone signals.

6. Satellite receiver device (100, 200, 300) according to any one of the preceding claims, wherein the control unit (104, 204, 304) is configured to visually limit the reproducible content channels in a user menu of the satellite receiver device (100, 200, 300).

7. Satellite receiver device (100, 200, 300) according to any one of the preceding claims, wherein the control unit (104, 204, 304) is configured to provide control signals to the LNB (152, 252, 352) according to a user channel selection if no control signals are detected by the detector (102, 202, 302).

8. Method for receiving satellite signals (150, 250, 350) via a low-noise block downconverter, LNB, (152, 252, 352) and reproducing content channels transported in the received satellite signals (150, 250, 350), the method comprising:
receiving (S1) the satellite signals (150, 250, 350) with a signal input connector (101, 201, 301) of a satellite receiver device (100, 200, 300),
detecting (S2) control signals in the received satellite signals (150, 250, 350) with a detector (102, 202, 302) coupled to the signal input connector (101, 201, 301), and
limiting (S3) with a control unit (104, 204, 304) a number of reproducible content channels to the content channels that are transported in the satellite signals (150, 250, 350) according to the detected control signals if control signals are detected in the received satellite signals (150, 250, 350) by the detector (102, 202, 302).

9. Method according to claim 8, wherein the control signals comprise a control voltage, and the method comprising detecting a voltage level of the control voltage and providing a respective voltage information to the control unit (104, 204, 304).

10. Method according to claim 9, wherein if a voltage level of 13 V is detected, the control unit (104, 204, 304) limits the reproducible content channels to content channels that are transmitted via vertically polarized satellite signals (150, 250, 350), and if a voltage level of 18 V is detected, the control unit (104, 204, 304) limits the reproducible content channels to content channels that are transmitted via horizontally polarized satellite signals (150, 250, 350).

11. Method according to any one of the preceding claims 8 to 10, wherein the control signals comprise at least one tone signal with predetermined frequencies, especially a tone signal with a frequency of 22 kHz, and wherein the method comprises detecting the tone signals and providing a respective frequency information to the control unit (104, 204, 304).

12. Method according to claim 11, wherein if at least one tone signal is detected, the control unit (104, 204, 304) limits the reproducible content channels to content channels that are transmitted via a frequency band that corresponds to the detected tone signals.

13. Method according to any one of the preceding claims 8 to 12, wherein the control unit (104, 204, 304) visually limits the reproducible content channels in a user menu of the satellite receiver device (100, 200, 300).

14. Method according to any one of the preceding claims 8 to 13, wherein the control unit (104, 204, 304) provides control signals to the LNB (152, 252, 352) according to a user channel selection if no control signals are detected by the detector (102, 202, 302).
